# EUROPÄISCHE PATENTANMELDUNG

(11) **EP 3 771 598 A1**
(43) Veröffentlichungstag der Anmeldung: **03.02.2021**
(21) Anmeldenummer: 20187832.9
(22) Anmeldetag: 27.07.2020
(51) Int. Cl.: B60R 9/10

(54) **DACHTRÄGERANORDNUNG FÜR EIN KRAFTFAHRZEUG**

(30) Priorität: 31.07.2019 DE 102019211471
(71) Anmelder: ATERA GmbH, 88299 Leutkirch im Allgäu (DE)
(72) Erfinder: Raida, Hans-Joachim, 42799 Leichlingen (DE); Schulz, Albert, 88316 Isny (DE)
(74) Vertreter: Patentanwälte Ruff, Wilhelm, Beier, Dauster & Partner mbB

(57) **Zusammenfassung**

2.1 Eine derartige Dachträgeranordnung mit wenigstens einem ersten Dachträgerprofil und einem zweiten Dachträgerprofil, die - in einem betriebsfertig montierten Zustand - jeweils in Fahrzeugquerrichtung über eine Dachfläche des Kraftfahrzeugs erstreckt und im Bereich der Dachfläche an dem Kraftfahrzeug befestigt sind, und mit wenigstens einer Radschiene, die zur Aufnahme eines mittels des Kraftfahrzeugs zu transportierenden Fahrrads vorgesehen und - im betriebsfertig montierten Zustand - in Fahrzeuglängsrichtung über die Dachfläche erstreckt und an dem ersten Dachträgerprofil und an dem zweiten Dachträgerprofil befestigt ist, wobei die Radschiene einen ersten Aufstellabschnitt, der zum Aufstellen eines Vorderrads und/oder einer Vorderradgabel des Fahrrads vorgesehen ist, und einen zweiten Aufstellabschnitt, der zum Aufstellen eines Hinterrads des Fahrrads vorgesehen ist, aufweist, und wobei die Radschiene wenigstens abschnittsweise geneigt längserstreckt ist, ist bekannt.

2.2 Erfindungsgemäß ist die Radschiene wenigstens im Bereich des ersten Aufstellabschnitts und im Bereich des zweiten Aufstellabschnitts geneigt längserstreckt, so dass der erste Aufstellabschnitt und der zweite Aufstellabschnitt - in Bezug auf eine gedachte, durchgängig gerade Längserstreckung der Radschiene - jeweils in Fahrzeughochrichtung an die Dachfläche angenähert sind.

2.3 Einsatz bei einem Personenkraftwagen.

## Beschreibung

Die Erfindung betrifft eine Dachträgeranordnung für ein Kraftfahrzeug mit wenigstens einem ersten Dachträgerprofil und einem zweiten Dachträgerprofil, die - in einem betriebsfertig montierten Zustand - jeweils in Fahrzeugquerrichtung über eine Dachfläche des Kraftfahrzeugs erstreckt und im Bereich der Dachfläche an dem Kraftfahrzeug befestigt sind, und mit wenigstens einer Radschiene, die zur Aufnahme eines mittels des Kraftfahrzeugs zu transportierenden Fahrrads vorgesehen und - im betriebsfertig montierten Zustand - in Fahrzeuglängsrichtung über die Dachfläche erstreckt und an dem ersten Dachträgerprofil und an dem zweiten Dachträgerprofil befestigt ist, wobei die Radschiene einen ersten Aufstellabschnitt, der zum Aufstellen eines Vorderrads und/oder einer Vorderradgabel des Fahrrads vorgesehen ist, und einen zweiten Aufstellabschnitt, der zum Aufstellen eines Hinterrads des Fahrrads vorgesehen ist, aufweist, und wobei die Radschiene wenigstens abschnittsweise geneigt längserstreckt ist.

Eine derartige Dachträgeranordnung ist aus der EP 1 532 019 B1 bekannt und als Fahrrad-Dachträger zum dachseitigen Transport eines Fahrrads vorgesehen. Die bekannte Dachträgeranordnung umfasst eine als Schienenabschnitt bezeichnete Radschiene, die zur Aufnahme des zu transportierenden Fahrrads vorgesehen ist. Im betriebsfertig an dem Kraftfahrzeug montierten Zustand ist die Radschiene in Fahrzeuglängsrichtung über eine Dachfläche des Kraftfahrzeugs erstreckt und in Fahrzeughochrichtung auf zwei als Verbindungsmittel bezeichneten Dachträgerprofilen abgestützt. Die Dachträgerprofile sind ihrerseits dachseitig befestigt und in Fahrzeugquerrichtung über die Dachfläche erstreckt. Weiter weist die Radschiene einen ersten Aufstellabschnitt und einen zweiten Aufstellabschnitt auf. Der erste Aufstellabschnitt ist zur Aufnahme des Vorderrads des Fahrrads vorgesehen. Der zweite Aufstellabschnitt ist zur Aufnahme des Hinterrads des Fahrrads vorgesehen. Bei der bekannten Dachträgeranordnung ist die Radschiene im Bereich des ersten Aufstellabschnitts geneigt längserstreckt, so dass der erste Aufstellabschnitt relativ zu dem zweiten Aufstellabschnitt in Fahrzeughochrichtung abgesenkt ist. Hierdurch wird ein auf der Radschiene abgestelltes Fahrrad dazu veranlasst, sich schwerkraftbedingt entlang der Radschiene in Richtung des ersten Aufstellabschnitts zu bewegen. Dies soll eine Befestigung des Fahrrads an der Dachträgeranordnung erleichtern.

Aufgabe der Erfindung ist es, eine Dachträgeranordnung der eingangs genannten Art bereitzustellen, die eine vereinfachte Handhabung bei der Anbringung des zu transportierenden Fahrrads ermöglicht und im Fahrbetrieb des Kraftfahrzeugs vorteilhafte Eigenschaften aufweist.

Diese Aufgabe wird dadurch gelöst, dass die Radschiene wenigstens im Bereich des ersten Aufstellabschnitts und im Bereich des zweiten Aufstellabschnitts geneigt längserstreckt ist, so dass der erste Aufstellabschnitt und der zweite Aufstellabschnitt - in Bezug auf eine gedachte, durchgängig gerade Längserstreckung der Radschiene - jeweils in Fahrzeughochrichtung an die Dachfläche angenähert sind. Durch die erfindungsgemäße Lösung ergibt sich eine in Fahrzeughochrichtung - im Vergleich zu einer durchgängig gerade längserstreckten Radschiene - niedrigere Aufstellposition des zu transportierenden Fahrrads auf der Radschiene. Dies erleichtert eine Anbringung des Fahrrads und ermöglicht im Ergebnis eine vereinfachte Handhabung der Dachträgeranordnung. Denn das zu transportierende Fahrrad muss zum Aufstellen auf die Radschiene - im Vergleich zu der gedachten, durchgängig geraden Längserstreckung der Radschiene - weniger hoch angehoben werden. Gleichzeitig ergeben sich durch die auf erfindungsgemäße Weise abgesenkte Aufstellposition des Fahrrads auf der Radschiene Vorteile im Fahrbetrieb des Kraftfahrzeugs. Denn durch die in Richtung der Dachfläche abgesenkten Aufstellabschnitte wird ein Massenschwerpunkt des zu transportierenden Fahrrads - im Vergleich zur gedachten, durchgängig geraden Längserstreckung der Radschiene - ebenfalls in Richtung der Dachfläche abgesenkt. Der abgesenkte Massenschwerpunkt ermöglicht verbesserte fahrdynamische Eigenschaften des Kraftfahrzeugs, insbesondere bei Kurvenfahrten. Zudem ergibt sich eine vergleichsweise verringerte fahrzustandsbedingte Beanspruchung der Bauteile und/oder Abschnitte der Dachträgeranordnung. Das erste Dachträgerprofil und das zweite Dachträgerprofil sind im betriebsfertig montierten Zustand in Fahrzeuglängsrichtung voneinander beabstandet an der Dachfläche angeordnet. Zur Befestigung der Dachträgerprofile an dem Kraftfahrzeug können grundsätzlich bekannte Stützfüße mit Klemmeinrichtungen vorgesehen sein. Die wenigstens eine Radschiene kann zur Befestigung an den beiden Dachträgerprofilen in Fahrzeughochrichtung auf denselben abgestützt und kraft- und/oder formschlüssig lösbar mit denselben zusammengefügt sein. Eine solche Abstützung auf den Dachträgerprofilen ist jedoch nicht zwingend. Alternativ kann die Radschiene in Fahrzeughochrichtung unterhalb der beiden Dachträgerprofile erstreckt und unterseitig kraft- und/oder formschlüssig lösbar mit denselben zusammengefügt sein. Weiter alternativ kann die Radschiene abschnittsweise oberhalb und abschnittsweise unterhalb der Dachträgerprofile erstreckt sein. Vorzugsweise ist der wenigstens einen Radschiene eine Befestigungsvorrichtung zur Befestigung des zu transportierenden Fahrrads an der Radschiene zugeordnet. Die Befestigungsvorrichtung ist vorzugsweise in Form eines relativ zu der Radschiene schwenkbeweglichen Haltebügels ausgebildet. Dem Haltebügel ist vorzugsweise eine weitere Klemmeinrichtung zugeordnet, der zur Befestigung des Fahrrads auf grundsätzlich bekannte Weise an dessen Rahmen angreift. Es versteht sich, dass die Dachträgeranordnung zusätzlich zu der wenigstens einen Radschiene weitere, vorzugsweise gleichartig gestaltete, Radschienen aufweisen kann. Beispielsweise kann die Dachträgeranordnung zwei, drei oder vier in Fahrzeugquerrichtung voneinander beabstandete und jeweils an den Dachträgerprofilen befestigte Radschienen aufweisen. Der erste Aufstellabschnitt und der zweite Aufstellabschnitt sind in Längsrichtung der Radschiene, die im betriebsfertig montierten Zustand parallel zur Fahrzeuglängsrichtung orientiert ist, voneinander beabstandet angeordnet. Vorzugsweise ist sowohl dem ersten Aufstellabschnitt als auch dem zweiten Aufstellabschnitt jeweils eine Radschale zur Aufnahme des Vorder- bzw. Hinterrads zugeordnet. Dem ersten Aufstellabschnitt kann alternativ oder zusätzlich eine Spannaufnahme zur Befestigung der Vorderradgabel bei demontiertem Vorderrad zugeordnet sein. Die Radschiene kann im Bereich des ersten Aufstellabschnitts und im Bereich des zweiten Aufstellabschnitts gerade und/oder gekrümmt geneigt ausgebildet sein. Bei einer geraden Neigung ergibt sich somit jeweils ein konstanter Neigungswinkel in Richtung der Dachfläche. Demgegenüber ergibt sich bei einer gekrümmten Neigung ein jeweils veränderlicher Neigungswinkel der Radschiene im Bereich der Aufstellabschnitte.

In Ausgestaltung der Erfindung weist die Radschiene einen ersten Stützabschnitt, der auf dem ersten Dachträgerprofil abgestützt ist, und einen zweiten Stützabschnitt, der auf dem zweiten Dachträgerprofil abgestützt ist, auf, wobei der erste Aufstellabschnitt in Fahrzeughochrichtung unter den ersten Stützabschnitt abgesenkt ist, und wobei der zweite Aufstellabschnitt in Fahrzeughochrichtung unter den zweiten Stützabschnitt abgesenkt ist. Diese Ausgestaltung der Erfindung ist insbesondere dann vorteilhaft, wenn die Radschiene in Fahrzeughochrichtung zur Befestigung auf den Dachträgerprofilen abgestützt ist. Durch das Absenken der Aufstellabschnitte unter die Stützabschnitte kann insbesondere in einem in Fahrzeuglängsrichtung zwischen den Aufstellabschnitten angeordneten Mittenabschnitt der Radschiene ein ausreichender Abstand zur Dachfläche erreicht werden. Dies ist insbesondere dann vorteilhaft, wenn das Kraftfahrzeug mit einem öffnungsfähigen Fahrzeugdach ausgestattet ist, das in Öffnungsstellung einer in Fahrzeughochrichtung nach oben von der Dachfläche abragt. Die Radschiene ist vorzugsweise im Bereich des ersten Stützabschnitts form- und/oder kraftschlüssig lösbar an dem ersten Dachträgerprofil befestigt. Weiter vorzugsweise ist die Radschiene an dem zweiten Stützabschnitt form- und/oder kraftschlüssig lösbar an dem zweiten Dachträgerprofil befestigt.

In weiterer Ausgestaltung der Erfindung weist die Radschiene im Bereich des ersten Aufstellabschnitts und/oder im Bereich des zweiten Aufstellabschnitts jeweils einen über ihrer Länge konstanten Neigungswinkel auf. Dementsprechend ist der erste Aufstellabschnitt und/oder der zweite Aufstellabschnitt gerade und in Richtung der Dachfläche nach unten geneigt erstreckt. Dies ermöglicht insbesondere eine einfache und kostengünstige Fertigung der Radschiene, da auf eine aufwändige, insbesondere gekrümmte, Gestaltgebung verzichtet werden kann. Vorzugsweise ist die Radschiene sowohl im Bereich des ersten Aufstellabschnitts als auch im Bereich des zweiten Aufstellabschnitts gerade in Richtung der Dachfläche nach unten geneigt. Sofern die Radschiene Stützabschnitte zum Abstützen auf den Dachträgerprofilen aufweist, ist die Radschiene vorzugsweise im Bereich der Stützabschnitte abgewinkelt, so dass sich der besagte konstante Neigungswinkel im Bereich des ersten und/oder zweiten Aufstellabschnitts ergibt. Für den Fall, dass die Radschiene an beiden Aufstellabschnitten einen konstanten Neigungswinkel aufweist, sind die jeweiligen Neigungswinkel im mathematischen Sinn entgegengesetzt orientiert. Vorzugsweise sind die Neigungswinkel betragsmäßig gleich groß bemessen.

In weiterer Ausgestaltung der Erfindung weist die Radschiene im Bereich des ersten Aufstellabschnitts und/oder im Bereich des zweiten Aufstellabschnitts jeweils einen über ihrer Länge veränderlichen Neigungswinkel auf. Dementsprechend ist die Radschiene im Bereich des ersten und/oder zweiten Aufstellabschnitts gekrümmt in Richtung der Dachfläche nach unten geneigt. Infolge der Krümmung ergibt sich der veränderliche Neigungswinkel. Vorzugsweise weist die Radschiene im Bereich des ersten und des zweiten Aufstellabschnitts einen veränderlichen Neigungswinkel auf. In diesem Fall weisen die Neigungswinkel im mathematischen Sinn unterschiedliche Vorzeichen auf. Vorzugsweise sind die veränderlichen Neigungswinkel betragsmäßig gleich, so dass die Radschiene im Bereich beider Aufstellabschnitte zueinander identische Krümmungen aufweist. Die Krümmung der Radschiene im Bereich des ersten Aufstellabschnitts und/oder des zweiten Aufstellabschnitts kann konstant oder über der Länge der Radschiene veränderlich sein. Diese Ausgestaltung der Erfindung kann insbesondere aerodynamische Vorteile bieten, so dass im Fahrbetrieb des Kraftfahrzeugs vergleichsweise verminderte Windgeräusche auftreten können.

In weiterer Ausgestaltung der Erfindung ist ein Mittenabschnitt der Radschiene, der zwischen dem ersten Aufstellabschnitt und dem zweiten Aufstellabschnitt angeordnet ist, durchgängig gerade längserstreckt. Der Mittenabschnitt ist in Längsrichtung der Radschiene und somit in Fahrzeuglängsrichtung zwischen den Aufstellabschnitten angeordnet. Durch die durchgängig gerade Längserstreckung des Mittenabschnitts kann insbesondere eine einfache und kostengünstige Herstellung der Radschiene erreicht werden.

In weiterer Ausgestaltung der Erfindung ist ein Mittenabschnitt der Radschiene, der zwischen dem ersten Aufstellabschnitt und dem zweiten Aufstellabschnitt angeordnet, ist, durchgängig gekrümmt längserstreckt, so dass der Mittenabschnitt - in Bezug auf die gedachte, durchgängig gerade Längserstreckung der Radschiene - in Fahrzeughochrichtung weiter von der Dachfläche beabstandet ist. Der Mittenabschnitt ist in Längsrichtung der Radschiene und damit in Fahrzeuglängsrichtung zwischen den Aufstellabschnitten angeordnet. Durch die durchgängig gekrümmte Längserstreckung des Mittenabschnitts ist die Radschiene abseits der Aufstellabschnitte in Fahrzeughochrichtung weiter von der Dachfläche beabstandet als dies bei einer gedachten durchgängig geraden Längserstreckung der Radschiene der Fall wäre. Diese Ausgestaltung ist insbesondere dann vorteilhaft, wenn das Kraftfahrzeug mit einem öffnungsfähigen Fahrzeugdach ausgestattet ist. Denn durch die weiter von der Dachfläche beabstandete Anordnung der Radschiene im Bereich des Mittenabschnitts wird gewährleistet, dass das öffnungsfähige Fahrzeugdach bei einer Verlagerung in eine Öffnungsstellung nicht mit der Dachträgeranordnung, insbesondere der Radschiene, kollidiert.

In weiterer Ausgestaltung der Erfindung weist die Radschiene eine über ihrer Länge konstante Krümmung auf. Bei dieser Ausgestaltung der Erfindung sind dementsprechend sowohl der erste als auch der zweite Aufstellabschnitt und zudem der Mittenabschnitt längs gekrümmt gestaltet. Hierdurch weist die Radschiene über ihrer gesamten Länge die konstante Krümmung auf. Durch die konstante Krümmung ergibt sich eine bogenförmige Gestalt der Radschiene. Vorzugsweise ist ein Krümmungsradius der Radschiene größer als 3 m. Eine solche Bemessung der Krümmung hat sich im Hinblick auf die Absenkung der Aufstellabschnitte einerseits und auf die weitere Beabstandung des Mittenabschnitts andererseits als besonders vorteilhaft erwiesen. Zudem gewährleistet die konstante Krümmung, dass auf die Radschiene auftreffendes Regenwasser zuverlässig in Richtung der Dachfläche abgeleitet wird. Dies wirkt einer ungewollten Eisbildung an der Dachträgeranordnung entgegen.

In weiterer Ausgestaltung der Erfindung ist die Krümmung der Radschiene auf eine Krümmung der Dachfläche abgestimmt, insbesondere parallel zu der Krümmung der Dachfläche erstreckt. Diese Ausgestaltung der Erfindung ist aerodynamisch besonders vorteilhaft. Hierdurch können im Fahrbetrieb naturgemäß auftretende Windgeräusche weiter reduziert werden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in schematisch stark vereinfachter Seitenansicht eine Ausführungsform einer erfindungsgemäßen Dachträgeranordnung, die in einem betriebsfertig montierten Zustand zum Transport eines Fahrrads dachseitig an einem Kraftfahrzeug befestigt ist,
- Fig. 2: in schematischer Seitenansicht eine Radschiene der Dachträgeranordnung nach Fig. 1, wobei der Radschiene Radschalen sowie eine Befestigungsvorrichtung zugeordnet sind,
- Fig. 3: in einer weitergehend schematisch vereinfachten Seitenansicht die Dachträgeranordnung nach Fig. 1,
- Fig. 4: in einer der Fig. 3 entsprechenden schematisch stark vereinfachten Seitenansicht eine weitere Ausführungsform einer erfindungsgemäßen Dachträgeranordnung und
- Fig. 5: in einer den Fig. 3 und 4 entsprechenden Darstellungsweise eine weitere Ausführungsform einer erfindungsgemäßen Dachträgeranordnung.

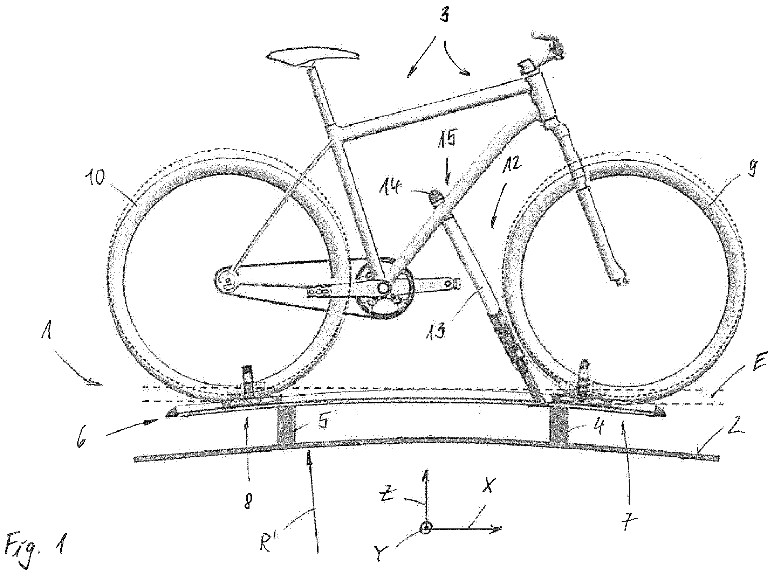

Gemäß Fig. 1 ist eine Dachträgeranordnung 1 an einer Dachfläche 2 eines ansonsten nicht näher dargestellten Kraftfahrzeugs in Form eines Personenkraftwagens angeordnet und zum dachseitigen Transport eines Fahrrads 3 vorgesehen.

Die Dachträgeranordnung 1 weist ein erstes Dachträgerprofil 4 und ein zweites Dachträgerprofil 5 auf, wobei die beiden Dachträgerprofile 4, 5 anhand Fig. 1 lediglich stark vereinfacht dargestellt sind. Die Dachträgerprofile 4, 5 sind im fahrzeugfest betriebsfertig montierten Zustand jeweils in Fahrzeugquerrichtung Y über die Dachfläche 2 erstreckt. Zudem sind die Dachträgerprofile 4, 5 auf grundsätzlich bekannte Weise im Bereich der Dachfläche 2 an dem Kraftfahrzeug befestigt. Zu diesem Zweck können die Dachträgerprofile 4, 5 jeweils stirnendseitig mit Stützfüßen versehen sein, die auf grundsätzlich bekannte Weise im Bereich der Dachfläche 2 lösbar festgeklemmt sind. Das erste Dachträgerprofil 4 und das zweite Dachträgerprofil 5 sind in Fahrzeuglängsrichtung X voneinander beabstandet an der Dachfläche 2 angeordnet und zueinander parallel erstreckt.

Zudem weist die Dachträgeranordnung 1 wenigstens eine Radschiene 6 auf, die zur Aufnahme des zu transportierenden Fahrrads 3 vorgesehen ist. Die Radschiene 6 ist im betriebsfertig montierten Zustand in Fahrzeuglängsrichtung X über die Dachfläche 2 erstreckt und zudem auf grundsätzlich bekannte Weise lösbar an den Dachträgerprofilen 4, 5 befestigt.

Die Radschiene 6 weist einen ersten Aufstellabschnitt 7 und einen zweiten Aufstellabschnitt 8 auf. Die Aufstellabschnitte 7, 8 sind an einander in Fahrzeuglängsrichtung X gegenüberliegenden Endbereichen der Radschiene 6 angeordnet. Dabei ist der erste Aufstellabschnitt 7 zum Aufstellen eines Vorderrads 9 des Fahrrads 3 vorgesehen. Der zweite Aufstellabschnitt 8 ist zum Aufstellen eines Hinterrads des Fahrrads 3 vorgesehen.

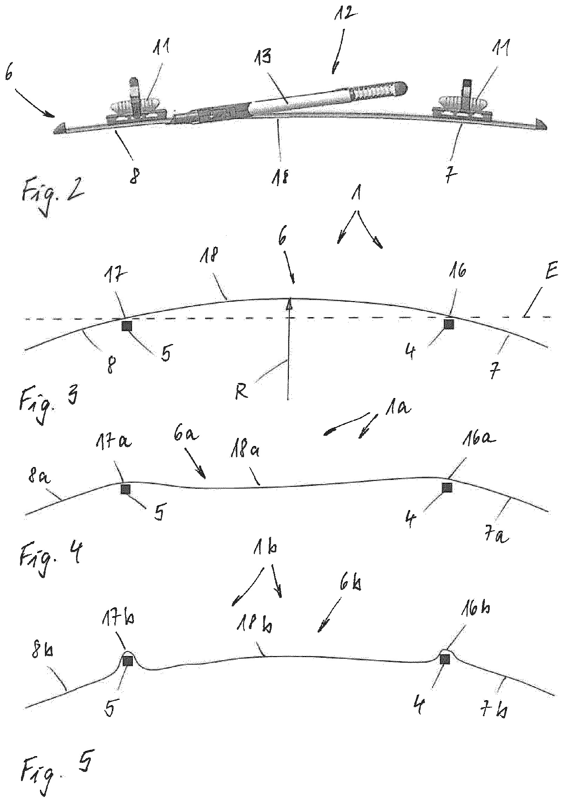

Weitere Details der Radschiene 6 sind anhand Fig. 2 gezeigt. Dort ist ersichtlich, dass der Radschiene 6 zwei Radschalen 11 sowie eine Befestigungsvorrichtung 12 zugeordnet sind. Eine solche Gestaltung ist jedoch nicht zwingend. Die Radschalen 11 sind auf grundsätzlich bekannte Weise an der Radschiene 6 festgelegt und dienen der Fixierung des Vorder- bzw. Hinterrads 9, 10. Die Befestigungsvorrichtung 12 weist einen Haltebügel 13 auf, der auf grundsätzlich bekannte Weise um eine nicht näher bezeichnete Schwenkachse schwenkbeweglich an der Radschiene 6 festgelegt ist. In der anhand Fig. 1 ersichtlichen Konfiguration ist der Haltebügel 13 um die besagte Schwenkachse in Fahrzeughochrichtung Z nach oben verschwenkt. Demgegenüber ist der Haltebügel 13 in der anhand Fig. 2 ersichtlichen Konfiguration um die Schwenkachse in Fahrzeughochrichtung Z nach unten verschwenkt und somit auf die Radschiene 6 geklappt. Die Befestigungsvorrichtung 12 weist zudem eine Klemmeinrichtung 14 auf (Fig. 1), die zur Befestigung des Fahrrads 3 an der Dachträgeranordnung 1 auf grundsätzlich bekannte Weise an einem Rahmenabschnitt 15 lösbar festgeklemmt ist.

Bei der gezeigten Ausführungsform ist die Radschiene 6 in Form eines aus Aluminium gefertigten und spezifisch geformten Strangpressprofils gestaltet. Bei einer nicht gezeigten Ausführungsform ist die Radschiene aus Kunststoff und/oder Metallblech gefertigt.

Anhand Fig. 1 ist ersichtlich, dass die Radschiene 6 wenigstens im Bereich des ersten Aufstellabschnitts 7 und im Bereich des zweiten Aufstellabschnitts 8 relativ zur Fahrzeuglängsrichtung X geneigt längserstreckt ist. Aufgrund dieser geneigten Längserstreckung sind der erste Aufstellabschnitt 7 und der zweite Aufstellabschnitt 8 - in Bezug auf eine gedachte, durchgängig gerade Längserstreckung E der Radschiene, die in Fig. 1 zur besseren Verdeutlichung strichliert eingezeichnet ist - jeweils in Fahrzeughochrichtung Z an die Dachfläche 2 angenähert.

Mit anderen Worten ausgedrückt ist die Radschiene 6 im Bereich des Vorderrads 9 in Richtung der Dachfläche 2 nach unten geneigt. Zudem ist die Radschiene 6 im Bereich des Hinterrads 10 in Richtung der Dachfläche 2 nach unten geneigt. Hierdurch ergibt sich eine an die Dachfläche 2 angenäherte Aufstellposition des Fahrrads 3. Infolge dieser in Hochrichtung Z - im Vergleich zu der geraden Längserstreckung E - in Fahrzeughochrichtung Z nach unten verlagerten Aufstellposition ergeben sich zum einen Vorteile beim Anbringen des Fahrrads 3 an der Dachträgeranordnung 1. Zum anderen ergeben sich gleichzeitig Vorteile im Fahrbetrieb des Kraftfahrzeugs.

Bei der anhand Fig. 1 gezeigten Ausführungsform ist sowohl der erste Aufstellabschnitt 7 als auch der zweite Aufstellabschnitt 8 im Vergleich zu der durchgängig geraden Längserstreckung E um in etwa 3 cm in Richtung der Dachfläche 2 angenähert. Dementsprechend ergibt sich eine um in etwa 3 cm niedrigere Positionierung des Massenschwerpunkts des Fahrrads 3 in der anhand Fig. 1 ersichtlichen Konfiguration. Durch diese Gestaltung der Radschiene 6 muss das Fahrrad 3 zur Anbringung an der Dachträgeranordnung 1 in vorteilhafter Weise vergleichsweise weniger hoch angehoben werden. Zudem wirken im Fahrbetrieb des Kraftfahrzeugs aufgrund des an die Dachfläche 2 angenäherten Massenschwerpunkts des Fahrrads 3 geringere fahrzustandsbedingte Massenkräfte und/oder -momente auf die Dachträgeranordnung 1. Einzelne Bauteile und/oder Abschnitte der Dachträgeranordnung 1 können hierdurch eine vergleichsweise verringerte Beanspruchung erfahren.

Bei der Ausführungsform nach den Fig. 1 bis 3 weist die Radschiene 6 im Bereich des ersten Aufstellabschnitts 7 und im Bereich des zweiten Aufstellabschnitts 8 jeweils einen über ihrer Länge - und damit über der Fahrzeuglängsrichtung X - veränderlichen Neigungswinkel auf. Dies ist insbesondere anhand Fig. 3 ersichtlich. Dort ist zu Vergleichszwecken die durchgängig gerade Längserstreckung E strichliert eingezeichnet. In Bezug auf die gerade Längserstreckung E ist die Radschiene 6 im Bereich der Aufstellabschnitte 7, 8 jeweils gekrümmt in Fahrzeughochrichtung Z nach unten geneigt.

Wie weiter anhand der stark vereinfachten schematischen Darstellung der Fig. 3 gezeigt ist, weist die Radschiene 6 einen ersten Stützabschnitt 16 und einen zweiten Stützabschnitt 17 auf. Der erste Stützabschnitt 16 ist in Fahrzeughochrichtung Z auf dem ersten Dachträgerprofil 4 abgestützt. Der zweite Stützabschnitt 17 ist in Fahrzeughochrichtung Z auf dem zweiten Dachträgerprofil 5 abgestützt. Eine solche Gestaltung ist jedoch nicht zwingend. Denn anstelle einer oberseitig auf den Dachträgerprofilen 4, 5 abgestützten Anordnung der Radschiene 6 kann dieselbe auch unterseitig an denselben festgelegt sein. Aufgrund der geneigten Längserstreckung im Bereich der Aufstellabschnitte 7, 8 ist die Radschiene im Bereich derselben in Fahrzeughochrichtung Z unter die Stützabschnitte 16, 17 abgesenkt.

Zudem weist die Radschiene 6 einen in Fahrzeuglängsrichtung X zwischen den Aufstellabschnitten 7, 8 angeordneten Mittenabschnitt 18 auf. Bei der Ausführungsform nach den Fig. 1 bis 3 ist der Mittenabschnitt 18 durchgängig gekrümmt erstreckt. Aufgrund dieser gekrümmten Erstreckung ist der Mittenabschnitt 18 - in Bezug auf die gedachte, durchgängig gerade Längserstreckung E - in Fahrzeughochrichtung Z weiter von der Dachfläche 2 beabstandet. Dies ist insbesondere dann vorteilhaft, wenn das Kraftfahrzeug ein öffnungsfähiges Fahrzeugdach im Bereich der Dachfläche 2 aufweist, das in einer Öffnungsstellung in Fahrzeughochrichtung Z über die Dachfläche 2 hinausragt. Durch die weiter von der Dachfläche 2 beabstandete Anordnung des Mittenabschnitts 17 wird eine ungewollte Kollision des öffnungsfähigen Fahrzeugdachs mit der Dachträgeranordnung 1 vermieden.

Wie weiter insbesondere anhand Fig. 1 ersichtlich ist, weist die Radschiene 6 eine über ihrer Länge konstante Krümmung und somit einen konstanten Krümmungsradius R auf. Vorliegend beträgt der Krümmungsradius R etwa 3 m, was jedoch nicht zwingend ist. Eine solche Bemessung des Krümmungsradius R hat sich als besonders vorteilhaft erwiesen. Aufgrund der konstanten Krümmung wird vermieden, dass sich auf die Radschiene 6 auftreffendes Regenwasser in unerwünschter Weise ansammelt. Stattdessen gewährleistet die konstante Krümmung ein zuverlässiges Ableiten des Regenwassers in Richtung der Dachfläche 2. Hierdurch wird eine ungewollte und potenziell unfallträchtige Eisbildung an der Dachträgeranordnung 1 vermieden.

Anhand Fig. 1 ist gezeigt, dass die Dachschiene 6 in Bezug auf ihren Krümmungsradius R auf einen Krümmungsradius R' der Dachfläche 2 abgestimmt ist. Dabei ist die Krümmung der Radschiene 6 parallel zur Krümmung der Dachfläche 2 erstreckt. Dies ist insbesondere vorteilhaft im Hinblick auf aerodynamische Eigenschaften der Dachträgeranordnung 1. Zudem wird ein optisch ansprechender Gesamteindruck im montierten Zustand und somit eine verbesserte Qualitätsanmutung der Dachträgeranordnung 1 erreicht.

Anhand der Fig. 4 und 5 sind weitere Ausführungsformen erfindungsgemäßer Dachträgeranordnungen 1a, 1b in schematisch stark vereinfachter Darstellungsweise gezeigt. Die Dachträgeranordnungen 1a, 1b entsprechen hinsichtlich ihrer gegenständlichen Gestaltung und Funktionsweise im Wesentlichen der Dachträgeranordnung 1, so dass nachfolgend lediglich auf wesentliche Unterschiede der Dachträgeranordnungen 1a, 1b eingegangen wird. Bauteile und/oder Abschnitte, die bei den Dachträgeranordnungen 1a, 1b einen identischen Aufbau und/oder eine identische Funktionsweise wie entsprechende Bauteile und/oder Abschnitte der Dachträgeranordnung 1 nach den Fig. 1 bis 3 aufweisen, werden im Hinblick auf die Dachträgeranordnungen 1a, 1b nicht gesondert erläutert. Funktionsgleiche Bauteile und/oder Abschnitte, die jedoch in ihrer konstruktiven Ausführung unterschiedlich sind, sind mit gleichen Bezugszeichenziffern unter Hinzufügung von entsprechenden Kleinbuchstaben bezeichnet.

Die Dachträgeranordnung 1a nach Fig. 4 unterscheidet sich im Wesentlichen dadurch von der Dachträgeranordnung 1, dass der Mittenabschnitt 18a jedenfalls im Wesentlichen durchgängig gerade erstreckt ist. Dabei weist der Mittenabschnitt 18a vorliegend eine leichte Einbuchtung in Richtung der Dachfläche 2 auf. Bei einer nicht gezeigten Ausführungsform ist der Mittenabschnitt vollständig durchgängig längserstreckt. Die Aufstellabschnitte 7a, 8a sind in einem ähnlichen Umfang wie bei der Dachträgeranordnung 1 in Fahrzeughochrichtung Z an die Dachfläche 2 angenähert. Dabei weist die Radschiene 6a im Bereich der Aufstellabschnitte 7a, 8a wiederum jeweils einen veränderlichen Neigungswinkel auf, wobei dieser im Unterschied zu der Radschiene 6 nicht gänzlich konstant, sondern geringfügig über der Länge der Radschiene 6a veränderlich ist.

Bei der Dachträgeranordnung 1b nach Fig. 5 ist die Radschiene 6b im Bereich der Dachträgerprofile 4, 5 um dieselben herumgeführt. Insoweit weist die Radschiene 6b im Bereich der Stützabschnitte 16b, 17b nicht näher bezeichnete Ausbuchtungen auf. Weiter im Unterschied zu den Dachträgeranordnungen 1, 1a sind die Aufstellabschnitte 7b, 8b gerade und nicht gekrümmt geneigt. Insoweit weist die Radschiene 6b im Bereich des ersten Aufstellabschnitts 7b und im Bereich des zweiten Aufstellabschnitts 8b jeweils einen über ihrer Länge konstanten Neigungswinkel auf.

## Patentansprüche

1. Dachträgeranordnung (1, 1a, 1b) für ein Kraftfahrzeug mit wenigstens einem ersten Dachträgerprofil (4) und einem zweiten Dachträgerprofil (5), die - in einem betriebsfertig montierten Zustand - jeweils in Fahrzeugquerrichtung (Y) über eine Dachfläche (2) des Kraftfahrzeugs erstreckt und im Bereich der Dachfläche (2) an dem Kraftfahrzeug befestigt sind, und mit wenigstens einer Radschiene (6, 6a, 6b), die zur Aufnahme eines mittels des Kraftfahrzeugs zu transportierenden Fahrrads (3) vorgesehen und - im betriebsfertig montierten Zustand - in Fahrzeuglängsrichtung (X) über die Dachfläche (2) erstreckt und an dem ersten Dachträgerprofil (4) und an dem zweiten Dachträgerprofil (5) befestigt ist, wobei die Radschiene (6, 6a, 6b) einen ersten Aufstellabschnitt (7, 7a, 7b), der zum Aufstellen eines Vorderrads (9) und/oder einer Vorderradgabel des Fahrrads (3) vorgesehen ist, und einen zweiten Aufstellabschnitt (8, 8a, 8b), der zum Aufstellen eines Hinterrads (10) des Fahrrads (3) vorgesehen ist, aufweist, und wobei die Radschiene (6, 6a, 6b) wenigstens abschnittsweise geneigt längserstreckt ist, **dadurch gekennzeichnet, dass** die Radschiene (6, 6a, 6b) wenigstens im Bereich des ersten Aufstellabschnitts (7, 7a, 7b) und im Bereich des zweiten Aufstellabschnitts (8, 8a, 8b) geneigt längserstreckt ist, so dass der erste Aufstellabschnitt (7, 7a, 7b) und der zweite Aufstellabschnitt (8, 8a, 8b) - in Bezug auf eine gedachte, durchgängig gerade Längserstreckung (E) der Radschiene - jeweils in Fahrzeughochrichtung (Z) an die Dachfläche (2) angenähert sind.

2. Dachträgeranordnung (1, 1a, 1b) nach Anspruch 1, **dadurch gekennzeichnet, dass** die Radschiene (6, 6a, 6b) einen ersten Stützabschnitt (16, 16a, 16b), der auf dem ersten Dachträgerprofil (4) abgestützt ist, und einen zweiten Stützabschnitt (17, 17a, 17b), der auf dem zweiten Dachträgerprofil (5) abgestützt ist, aufweist, wobei der erste Aufstellabschnitt (7, 7a, 7b) in Fahrzeughochrichtung (Z) unter den ersten Stützabschnitt (16, 16a, 16b) abgesenkt ist, und wobei der zweite Aufstellabschnitt (8, 8a, 8b) in Fahrzeughochrichtung unter den zweiten Stützabschnitt (17, 17a, 17b) abgesenkt ist.

3. Dachträgeranordnung (1b) nach Anspruch 1 oder 2, **dadurch gekennzeichnet, dass** die Radschiene (6b) im Bereich des ersten Aufstellabschnitts (7b) und/oder im Bereich des zweiten Aufstellabschnitts (8b) jeweils einen über ihrer Länge konstanten Neigungswinkel aufweist.

4. Dachträgeranordnung (1, 1a) nach Anspruch 1 oder 2, **dadurch gekennzeichnet, dass** die Radschiene (6, 6a) im Bereich des ersten Aufstellabschnitts (7, 7a) und/oder im Bereich des zweiten Aufstellabschnitts (8, 8a) jeweils einen über ihrer Länge veränderlichen Neigungswinkel aufweist.

5. Dachträgeranordnung (1a) nach einem der vorhergehenden Ansprüche, **dadurch gekennzeichnet, dass** ein Mittenabschnitt (18a) der Radschiene (6a), der zwischen dem ersten Aufstellabschnitt (7a) und dem zweiten Aufstellabschnitt (8a) angeordnet ist, durchgängig gerade längserstreckt ist.

6. Dachträgeranordnung (1) nach einem der Ansprüche 1 bis 4, **dadurch gekennzeichnet, dass** ein Mittenabschnitt (18) der Radschiene (6), der zwischen dem ersten Aufstellabschnitt (7) und dem zweiten Aufstellabschnitt (8) angeordnet ist, durchgängig gekrümmt längserstreckt ist, so dass der Mittenabschnitt (18) - in Bezug auf die gedachte, durchgängig gerade Längserstreckung (E) der Radschiene - in Fahrzeughochrichtung (Z) weiter von der Dachfläche (2) beabstandet ist.

7. Dachträgeranordnung (1) nach Anspruch 6, **dadurch gekennzeichnet, dass** die Radschiene (6) eine über ihrer Länge konstante Krümmung (R) aufweist.

8. Dachträgeranordnung (1) nach Anspruch 7, **dadurch gekennzeichnet, dass** die Krümmung (R) der Radschiene (6) auf eine Krümmung (R') der Dachfläche (2) abgestimmt, insbesondere parallel zu der Krümmung (R') der Dachfläche (2) erstreckt, ist.
